(19) Europäisches Patentamt / European Patent Office / Office européen des brevets

(11) **EP 3 246 518 B1**

(12) **EUROPÄISCHE PATENTSCHRIFT**

(45) Veröffentlichungstag und Bekanntmachung des Hinweises auf die Patenterteilung:
**20.09.2023 Patentblatt 2023/38**

(21) Anmeldenummer: **17154291.3**

(22) Anmeldetag: **02.02.2017**

(51) Internationale Patentklassifikation (IPC):
**F01D 5/14** *(2006.01)* **F01D 17/16** *(2006.01)*
**F04D 29/56** *(2006.01)*

(52) Gemeinsame Patentklassifikation (CPC):
**F04D 29/681; F01D 5/143; F01D 17/162;**
**F04D 29/563;** F05D 2250/314; Y02T 50/60

(54) **LEITSCHAUFELKRANZ FÜR EINE STRÖMUNGSMASCHINE UND STRÖMUNGSMASCHINE**

GUIDE VANE RING FOR A TURBOMACHINE AND TURBOMACHINE

ANNEAU AUBAGÉ DIRECTEUR POUR UNE TURBOMACHINE ET TURBOMACHINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.04.2016 DE 102016207212**

(43) Veröffentlichungstag der Anmeldung:
**22.11.2017 Patentblatt 2017/47**

(73) Patentinhaber: **MTU Aero Engines AG 80995 München (DE)**

(72) Erfinder:
• **Wolf, Hannes**
  **82291 Mammendorf (DE)**
• **Halcoussis, Alexander**
  **85778 Haimhausen (DE)**

(56) Entgegenhaltungen:
EP-A1- 1 188 933   EP-A1- 2 884 054
WO-A1-2010/079204   DE-A1-102013 222 980
DE-T2- 69 601 695

**Beschreibung**

Die Erfindung betrifft einen Leitschaufelkranz für eine Strömungsmaschine und eine Strömungsmaschine.

Strömungsmaschinen wie Flugtriebwerke und stationäre Gasturbinen haben regelmäßig mindestens eine verdichterseitige und/oder eine turbinenseitige Leitschaufelreihe mit einer Vielzahl von Leitschaufeln. Die Leitschaufelreihe bildet mit einem Innenring einen sogenannten Leitschaufelkranz. Zur Einstellung optimaler Betriebsbedingungen sind dabei die Leitschaufeln vorzugsweise um ihre Längsachse verschwenkbar und können so verschiedene Schwenkstellungen einnehmen. Man spricht in diesem Fall auch von Verstellleitschaufeln.

Der Innenring weist vorzugsweise in radialer Richtung eine Mehrzahl an Vertiefungen auf, in die jeweils ein Schaufelteller einer Leitschaufel eingesetzt ist. Eine radial äußere Lagerung der Leitschaufeln sowie deren Betätigung kann über Verstellzapfen der Leitschaufeln erfolgen, die mit einer entsprechenden Verstelleinrichtung am äußeren Gehäuse zusammenwirken können. An dem Innenring ist vorzugsweise ein Dichtungsträger geführt, der mit Dichtelementen bzw. Einlaufbelegen versehen ist, denen rotorseitige Dichtrippen gegenüberliegen.

Im Betrieb tritt in den Spalt zwischen den Wandungen der Vertiefungen im Innenring und dem jeweils eingesetzten Schaufelteller an der Druckseite des Schaufelblatts an der (in Hauptstromrichtung) hinteren Seite des Innenrings Luft ein, die an der Saugseite des Schaufelblatts an der (in Hauptstromrichtung) vorderen Seite des Innenrings wieder austritt. Die durch diese Leckage entstehenden Verwirbelungen beeinflussen den Lufthauptstrom nachteilig und beeinträchtigen so den Wirkungsgrad der Strömungsmaschine

DE 10 2013 222980 A1 offenbart den Stand der Technik.

Die vorliegende Erfindung hat die Aufgabe, einen Leitschaufelkranz bzw. eine Strömungsmaschine bereitzustellen, bei dem /der die Leckage zwischen dem Innenring und einer eingesetzten Leitschaufel vermindert ist.

Die Aufgabe wird gelöst durch einen Leitschaufelkranz für eine Strömungsmaschine gemäß Anspruch 1 und eine Strömungsmaschine gemäß Anspruch 6.

Vorteilhafte Ausführungsformen sind in den Unteransprüchen, der Beschreibung und den Figuren offenbart.

Ein erfindungsgemäßer Leitschaufelkranz für eine Strömungsmaschine weist eine Leitschaufelreihe mit einer Mehrzahl von verschwenkbaren Leitschaufeln sowie einen Innenring mit einer der Mehrzahl von Leitschaufeln zugewandten Innenringoberfläche auf. Die Leitschaufeln haben jeweils ein Schaufelblatt und einen Schaufelteller. In einer nominalen und/oder in einer maximalen Öffnungsstellung der Leitschaufel weisen die Schaufelteller (an ihrer dem Schaufelblatt zugewandten Seite) in Richtung eines vorgesehenen, die Strömungsmaschine durchströmenden Hauptstroms betrachtet einen vorderen und einen hinteren Oberflächenbereich auf; der vordere und der hintere Oberflächenbereich mindestens eines der Schaufelteller weisen dabei einen (bezogen auf eine zentrale Achse des Innenrings) radialen Versatz zur Innenringoberfläche auf.

Als "nominale Öffnungsstellung" ist dabei eine Drehstellung der Leitschaufel zu verstehen, in der für zwei Punkte, die auf dem Rand der Oberfläche des Leitschaufeltellers einander bezüglich der Längsachse des Schaufelblattes, um welche die Leitschaufel verschwenkbar ist, diametral gegenüber und dabei mit der zentralen Achse des Innenrings in einer gemeinsamen Ebene liegen, ein maximal möglicher Unterschied in den Abständen der Punkte zu der zentralen Achse des Innenrings, welche im bestimmungsgemäß verbauten Zustand mit der Rotationsachse bzw. Maschinenachse der Strömungsmaschine übereinstimmt, erreicht wird. Unter allen möglichen Drehstellungen der Leitschaufel und denjenigen einander (bezüglich des Schaufeltellers) diametral gegenüberliegenden Randunkten p, q des Schaufeltellers, die (in der jeweiligen Drehstellung) mit der zentralen Achse X des Innenrings des Leitschaufelkranzes in einer gemeinsamen (Meridian-)Ebene liegen, ergibt sich somit für die nominale Öffnungsstellung ein maximaler Unterschied

$$ U(p,q) = |dist(p, X) - dist(q, X)| $$

zwischen den Abständen dist (p, X) und dist(q, X) der beiden Punkte jeweils von der zentralen Achse X des Innenrings. Diese Abstände sind dabei - wie für Abstände zwischen Punkten und Geraden üblich ist - jeweils die Längen der Lotstrecke der Punkte zur zentralen Achse X. Tatsächlich gibt es zwei Drehstellungen der Leitschaufel, auf welche diese Bedingung zutrifft, wobei hier nur diejenige Drehstellung als "nominale Öffnungsstellung" betrachtet werden soll, bei der sich Vorderkante des Schaufelblatts der Leitschaufel stromaufwärts von der Längsachse des Schaufelblatts befindet und sich eine Hinterkante des Schaufelblatts der Leitschaufel entsprechend stromabwärts von der Längsachse des Schaufelblatts befindet, jeweils bezogen auf die Hauptströmungsrichtung in der Strömungsmaschine.

In einer Strömungsmaschine ist vorzugsweise die Einstellung einer derartigen nominalen Öffnungsstellung für die Situation vorgesehen, dass die Strömungsmaschine eine Drehzahl hat, für die sie ausgelegt ist. Beispielsweise kann ein Flugzeugtriebwerk (als Strömungsmaschine) für einen sogenannten "Cruise-Mode" ausgelegt sein, nämlich für eine bestimmte Reisegeschwindigkeit in einer bestimmten Reisehöhe.

Eine maximale Öffnungsstellung kann beispielsweise eingestellt sein, wenn der Hauptstrom (verglichen mit einer demgegenüber verschwenkten Leitschaufel) durch das Schaufelblatt eine minimale Richtungsänderung erfährt. Die Einstellung einer derartigen maximalen Öffnungsstellung kann beispielsweise bei einem Start eines Flugzeugtriebwerks (als Strömungsmaschine) vorgesehen sein.

Die den Leitschaufeln zugewandte Innenringoberfläche und die (ihrem zugehörigen Schaufelblatt und damit ebenfalls den Leitschaufeln zugewandte) Oberfläche des Schaufeltellers verlaufen somit nicht entlang einer gemeinsamen, glatten Fläche, sondern der vordere und/oder der hintere Oberflächenbereich der Schaufeltelleroberfläche ist gegenüber der Innenringoberfläche versetzt, so dass also an einer Versatzstelle eine sich in (bezogen auf die zentrale Achse des Innenrings) radialer Richtung erhebende bzw. absenkende Stufe zwischen den besagten Oberflächen ausgebildet wird.

So kann ein Luftstrom im Spalt zwischen Schaufelteller und Innenring in der Vertiefung reduziert und somit die Leckage vermindert werden. Dadurch kann die Pumpgrenze der Strömungsmaschine erhöht und ihr Wirkungsgrad verbessert werden.

Eine Baugruppe für einen Leitschaufelkranz umfasst einen Innenring und mindestens eine in eine Vertiefung des Innenrings einsetzbare Leitschaufel. Deren Teller umfasst einen - in Richtung eines vorgesehenen, die Strömungsmaschine durchströmenden Hauptstroms betrachtet - vorderen und einen hinteren Oberflächenbereich. Funktionsgemäß zusammengesetzt ergibt eine Baugruppe einen erfindungsgemäßen Leitschaufelkranz gemäß einer der in dieser Schrift offenbarten Ausführungsformen.

Eine erfindungsgemäße Strömungsmaschine weist einen erfindungsgemäßen Leitschaufelkranz gemäß einer der in dieser Schrift offenbarten Ausführungsformen auf.

Erfindungsgemäß ist der Oberflächenbereich des Schaufeltellers (in der nominalen und/oder der maximalen Öffnungsstellung der Leitschaufel) gegenüber der Innenringoberfläche abgesenkt. Insbesondere ist der vordere (dem Schaufelblatt zugewandte) Oberflächenbereich des Schaufeltellers bei dieser Ausführungsform vorzugsweise in einer den Schaufelteller umgebenden Vertiefung des Innenrings versenkt.

Ein in die Strömungsmaschine eintretender Luftstrom wird dadurch vorteilhaft über den vorderen Oberflächenbereich hinweg geführt, so dass aus dem Spalt austretende Luft in diesem Bereich vor der Ausmischung mit dem Hauptstrom verzögert wird. Dadurch wird im hinteren Oberflächenbereich des Schaufeltellers zugleich eine Sogwirkung von Luft in den Spalt zwischen Schaufelteller und Innenring (in deren Vertiefung) reduziert. Insgesamt wird so der Leckageluftstrom vermindert.

Erfindungsgemäß ist der hintere Oberflächenbereich des Schaufeltellers (in der nominalen und/oder maximalen) Öffnungsstellung der Leitschaufel) gegenüber der Innenringoberfläche erhoben.

Insbesondere ragt der hintere Oberflächenbereich des Schaufeltellers bei dieser Ausführungsform vorzugsweise aus einer den Schaufelteller umgebenden Vertiefung des Innenrings heraus, beispielsweise in den Hauptstrom hinein.

Ein in die Strömungsmaschine eingetretener Hauptstrom wird somit vorteilhaft über den Spalt zwischen dem hinteren Oberflächenbereich des Schaufeltellers und dem Innenring hinweggeleitet. Ein Einströmen von Luft in den Spalt wird dadurch vermindert.

Vorteilhaft sind Ausführungsformen, bei denen der Versatz - insbesondere bei nominaler und/oder maximaler Öffnungsstellung der Leitschaufel - des vorderen und/oder hinteren Oberflächenbereichs gegenüber der Innenringoberfläche eine (Stufen-)Höhe (als betragsmäßiger, somit nicht vorzeichenbehafteter Wert) zwischen 1mm und 4mm und/oder 3% bis 15 %, bevorzugt 5 % bis 10 % des Durchmessers des Schaufeltellers oder einer Kanalhöhe (bzw. eines Radius des Leitschaufelkranzes) beträgt. Dabei kann die Höhe des Versatzes parallel zur Leitschaufelachse (bzw. radial bezüglich des Innenrings) und vorzugsweise an einer Stelle gemessen werden, an der die Höhe maximal ist. Diese Abmessungen sind besonders günstig, um einerseits den Hauptstrom in die Strömungsmaschine zu führen und andererseits die geschilderte Leckageminderung zu erreichen. Seitlich der Maximalstellen flacht der Versatz vorzugsweise kontinuierlich ab.

Sofern beide genannte Oberflächenbereiche des Schaufelblatts einen Versatz zur Innenringoberfläche ausbilden, können die jeweiligen (Stufen-)Höhen (als betragsmäßige, somit nicht vorzeichenbehaftete Werte) gleich oder verschieden groß sein. Somit können die Versätze an die durch die Innenringoberfläche bewirkte Strömungsführung angepasst sein.

Auf diese Weise wird eine Beeinflussung des Hauptstroms im Bereich des Schaufeltellers relativ gering gehalten und die Minderung des Leckagestroms somit vorwiegend durch eine Ausbremsung von Luft bewirkt, die aus dem Spalt im vorderen Oberflächenbereich heraustritt; diese Ausbremsung hat wiederum vorteilhaft eine verringerte Sogwirkung in den Spalt im hinteren Oberflächenbereich zur Folge.

Analog kann es vorteilhaft sein, wenn am vorderen Oberflächenbereich des Schaufeltellers ein Versatz wie genannt ausgebildet ist, der Schaufelteller im hinteren Oberflächenbereich jedoch im Wesentlichen stufenfrei zur Innenringoberfläche führt.

Der Schaufelteller kann an der dem Schaufelblatt zugewandten Seite eine im Wesentlichen ebene Oberfläche, eine im Wesentlichen konvexe, eine im Wesentlichen konkave oder eine gewellte Oberfläche (vorzugsweise mit mindestens einem konkaven und konvexen Abschnitt) aufweisen. So kann der Schaufelteller an die Innenringoberfläche angepasst sein und dabei den Hauptstrom geeignet über den Versatz zwischen vorderem bzw. hinterem Oberflächenbereich und Innenringoberfläche leiten.

Im Folgenden wird ein bevorzugtes Ausführungsbeispiel der Erfindung und zum Vergleich ein Ausschnitt eines Leitschaufelkranzes gemäß dem Stand der Technik anhand von Zeichnungen näher erläutert. Es versteht sich, dass einzelne Elemente und Komponenten auch anders kombiniert werden können als dargestellt.

Es zeigen schematisch:

Figur 1:  einen Abschnitt eines Leitschaufelkranzes gemäß dem Stand der Technik;

Figur 2:  einen Abschnitt eines Leitschaufelkranzes gemäß einer Ausführungsform der vorliegenden Erfindung; und

Figur 3:  eine Schnittdarstellung eines Leitschaufelkranzes gemäß einer Ausführungsform der vorliegenden Erfindung.

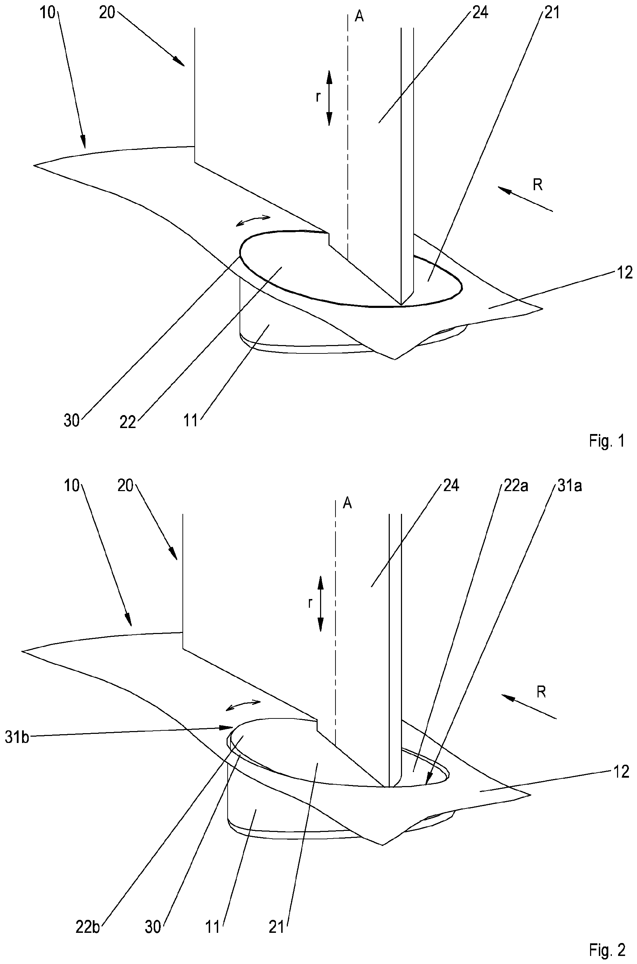

In der Figur 1 ist ein Abschnitt eines herkömmlichen Leitschaufelkranzes dargestellt. Der Abschnitt umfasst einen Teil eines Innenrings 10 mit einer Vertiefung 11, in die ein Schaufelteller 21 einer Leitschaufel 20 eingesetzt ist. Die Leitschaufel 20 umfasst außer dem Schaufelteller 21 ein Schaufelblatt 24. Um dessen Längsachse A, die bezogen auf den Innenring (bzw. dessen (nicht gezeigte) zentrale Achse) in radialer Richtung r verläuft, ist die Leitschaufel verschwenkbar. In der Darstellung der Figur 1 befindet sich die Leitschaufel 20 in einer nominalen Öffnungsstellung. Ein vorgesehener Hauptstrom verläuft in einer Richtung R.

Der Leitschaufel 20 bzw. deren Schaufelblatt 24 zugewandt (und damit einer nicht gezeigten zentralen Achse des Innenringes abgewandt) sind eine Innenringoberfläche 12 und eine Oberfläche 22 des Schaufeltellers. Beide zusammen liegen entlang einer glatten Fläche und sind nur durch einen Spalt 30 im Wesentlichen stufenfrei voneinander getrennt.

In der Figur 2 ist ein Abschnitt eines erfindungsgemäßen Leitschaufelkranzes in einer analogen Darstellung gezeigt; Elemente, die denen des in der Figur 1 dargestellten Leitschaufelkranzes entsprechen, sind jeweils mit denselben Bezugszeichen versehen; für ihre Beschreibung wird auf die der Figur 1 verwiesen.

Die Oberfläche 21 der Leitschaufel 20 weist in der in Figur 2 gezeigten Ausführungsform einen (in Bezug auf die vorgesehene Hauptstromrichtung R gesehen) vorderen Oberflächenbereich 22a und einen hinteren Oberflächenbereich 22b auf. Im dargestellten Ausführungsbeispiel bilden beide Oberflächenbereiche 22a, 22b (in der gezeigten nominalen Öffnungsstellung der Leitschaufel) am Spalt 30 einen (bezogen auf die zentrale Achse des Innenrings) radialen Versatz 31a bzw. 31b zur Innenringoberfläche 12 aus: Der vordere Oberflächenbereich 22a ist dabei gegenüber der Innenringoberfläche 12 (bzw. in die Vertiefung für den Schaufelteller hinein) abgesenkt, und der hintere Oberflächenbereich 22b ist gegenüber der Innenringoberfläche 12 erhoben (ragt also aus der Vertiefung für den Schaufelteller heraus).

Der Versatz 31a verzögt die Ausmischung einer Leckageströmung, die in diesem Bereich durch den Spalt 30 austritt, mit der Hauptströmung. Dadurch wird auch ein schädlicher Einfluss auf die Hauptströmung minimiert und zudem eine Sogwirkung von Luft in den Spalt, die insbesondere zwischen dem hinteren Oberflächenbereich 22b und der Innenringoberfläche 12 auftritt, reduziert.

Der Versatz 31b reduziert zusätzlich das Eindringen von Luft in den Spalt 30 in diesem Bereich, weil der Hauptstrom durch diesen Versatz 31b über den Spalt hinweg geleitet wird.

Insgesamt wird so die Leckageströmung minimiert.

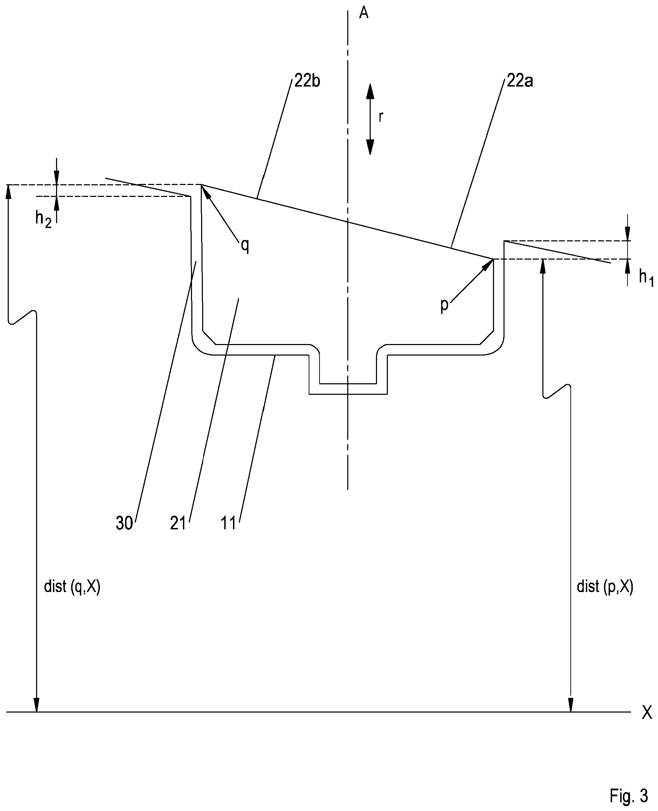

In Figur 3 ist ein Leitschaufelkranz gemäß einer Ausführungsform der vorliegenden Erfindung in einer Schnittdarstellung gezeigt. Die bereits mit Bezug auf die Figuren 1 und 2 beschriebenen Elemente sind wiederum mit denselben Bezugszeichen versehen, und für ihre Beschreibung wird auf die obigen Erläuterungen verwiesen.

Der gezeigte Schaufelteller 21 ist in der Figur 3 in der nominalen Öffnungsstellung der zugehörigen Leitschaufel dargestellt. Zur Verdeutlichung dieser Öffnungsstellung sind in der Figur (nicht maßstabsgetreu) die zentrale Achse X des Leitschaufelkranzes, die Punkte p und q und deren jeweilige Abstände dist(p,X) bzw. dist(q,X) zur zentralen Achse X eingezeichnet; die Punkte p,q liegen jeweils auf dem Rand der Oberfläche des Schaufeltellers 21 und einander bezüglich der Längsachse A des Schaufelblattes, um welche die Leitschaufel verschwenkbar ist, diametral gegenüber, und zwar in einer gemeinsamen Meridianebene der zentralen Achse X. In der dargestellten nominalen Öffnungsstellung ist der (betragsmäßige) Unterschied $U(p,q) = |dist(p, X) - dist(q, X)|$ unter allen möglichen Einstellungen der Leitschaufel maximal. Sind also nach einer Verdrehung der Leitschaufel zwei andere Punkte (hier nicht dargestellte) p', q' an den entsprechenden Positionen angeordnet (insbesondere ebenfalls einander diametral gegenüberliegend und in derselben Meridianebene wie die Figur 3 zeigt), so weisen diese Punkte p', q' einen kleineren Unterschied im Abstand zur zentralen Achse X des Innenrings auf als p und q.

Wie in der Figur 3 ferner zu erkennen ist, weist der Versatz zwischen dem Punkt p (im vorderen Oberflächenbereich 22a des Schaufeltellers 21) und der Innenringoberfläche (bezogen auf den Innenring) in radialer Richtung r eine Stufenhöhe $h_1$ auf, wobei der betragsmäßige, also nicht vorzeichenbehaftete Wert betrachtet wird.

Dem Punkt p diametral gegenüber liegend ist im Punkt q ein Versatz zwischen dem hinteren Oberflächenbereich 22b des Schaufeltellers 21 und der Innenringoberfläche zu erkennen. In (bezogen auf den Innenring) radialer Richtung r weist dieser Versatz eine Stufenhöhe $h_2$ auf.

Die Höhen $h_1$ und $h_2$ liegen jeweils vorzugsweise in einem Bereich von 3 % bis 15 % des Durchmessers des Schaufeltellers, besonders bevorzugt in einem Bereich von 5 % bis 10 % des Durchmessers des Schaufeltellers. Vorteilhafterweise betragen die Höhen $h_1$ und $h_2$ zwischen 1mm und 4mm, bevorzugter zwischen 1,5 und 2,5 mm. Im dargestellten Beispiel ist die Höhe $h_1$ größer als die Höhe $h_2$, so dass die erfindungsgemäße Reduktion der durch die Vertiefung verlaufenden Leckageströmung vor allem durch die reduzierte Ausmischung im vorderen Oberflächenbereich 22a des Schaufeltellers und die resultierende verminderte Sogwirkung von Luft in den Spalt 30 bewirkt und dabei eine Umlenkung des Hauptstroms durch die Oberfläche des Schaufeltellers (insbesondere im hinteren Oberflächenbereich 22b) gering gehalten wird.

In der gezeigten Ausführungsform weist der Schaufelteller eine im Wesentlichen ebene Oberfläche auf. In alternativen Ausführungsformen kann die Oberfläche des Schaufeltellers (zumindest in einem oder mehreren Abschnitt(en)) konvex (zum Schaufelblatt hin) oder konkav (vom Schaufelblatt weg) gewölbt sein oder eine gewellte Oberfläche (z.B. mit einem sinusförmigen Querschnitt) aufweisen, und/oder der vordere und der hintere Oberflächenbereich können auf verschiedenen Ebenen liegen. Auf diese Weise kann die Schaufeltellereroberfläche an die Innenringoberfläche 22 angepasst sein.

Ein erfindungsgemäßer Leitschaufelkranz für eine Strömungsmaschine minimiert eine Leckageströmung, die durch eine Vertiefung 11 verläuft, in die der Schaufelteller einer Leitschaufel eingesetzt ist. Der Leitschaufelkranz weist eine Leitschaufelreihe mit einer Mehrzahl von Leitschaufeln 20 mit jeweils einem Schaufelblatt 24 und einem Schaufelteller 21 sowie einen Innenring 10 mit einer der Mehrzahl von Leitschaufeln zugewandten Innenringoberfläche 12 auf. Die Schaufelteller 21 haben - in Richtung R eines vorgesehenen, die Strömungsmaschine durchströmenden Hauptstroms betrachtet - einen vorderen und einen hinteren Oberflächenbereich 22a, 22b. Der vordere und/oder der hintere Oberflächenbereich 22a, 22b mindestens eines der Schaufelteller weist in einer nominalen und/oder einer maximalen Öffnungsstellung der Leitschaufel einen (bezogen auf eine zentrale Achse X des Innenrings) radialen Versatz 31a, 31b zur Innenringoberfläche 12 auf.

Bezugszeichen

| 10 | Innenring |
| 11 | Vertiefung |
| 12 | Innenringoberfläche |
| 20 | Leitschaufel |
| 21 | Schaufelteller |
| 22 | Schaufeltelleroberfläche |
| 22a | vorderer Oberflächenbereich |
| 22b | hinterer Oberflächenbereich |
| 24 | Schaufelblatt |
| 30 | Spalt |
| 31a, 31b | Versatz |
| A | Längsachse des Schaufelblatts |
| $h_1$, $h_2$ | Höhe des Versatzes |
| p, q | einander diametral gegenüberliegende Punkte auf dem Rand des Schaufeltellers, die in einer gemeinsamen Meridianebene mit der Rotationsachse liegen |
| r | (bzgl. des Innenrings) radiale Richtung |
| R | Hauptstromrichtung |
| X | zentrale Achse des Innenrings (bzw. Maschinenachse der Strömungsmaschine) |

## Patentansprüche

1.  Leitschaufelkranz für eine Strömungsmaschine, wobei der Leitschaufelkranz aufweist:

    eine Leitschaufelreihe mit einer Mehrzahl von verschwenkbaren Leitschaufeln (20) mit jeweils einem Schaufelblatt (24) und einem Schaufelteller (21); sowie einen Innenring (10) mit einer der Mehrzahl von Leitschaufeln zugewandten Innenringoberfläche (12),
    wobei die Schaufelteller (21) - in Richtung (R) eines vorgesehenen, die Strömungsmaschine durchströmenden Hauptstroms betrachtet - einen vorderen und einen hinteren Oberflächenbereich (22a, 22b) aufweisen,
    wobei bei mindestens einem der Schaufelteller in einer nominalen und/oder einer maximalen Öffnungsstellung der Leitschaufel der vordere und/oder der hintere Oberflächenbereich (22a, 22b) bezogen auf eine zentrale Achse (X) des Innenrings (10) einen radialen Versatz (31a, 31b) zur Innenringoberfläche (12) aufweist,
    **dadurch gekennzeichnet, dass** der vordere Oberflächenbereich (22a) des Schaufeltellers in der nominalen und/oder der maximalen Öffnungsstellung der Leitschaufel gegenüber der Innenringoberfläche (12) abgesenkt ist und der hintere Oberflächenbereich (22b) des Schaufeltellers in der maximalen Öffnungsstellung der Leitschaufel gegenüber der Innenringoberfläche (12) erhoben ist.

2.  Leitschaufelkranz gemäß Anspruch 1, wobei der Versatz (31a) zwischen dem vorderen Oberflächenbereich und der Innenringoberfläche eine Höhe ($h_1$) aufweist, die 3 % bis 15 % des Durchmessers des Schaufeltellers (21) und/oder einer Kanalhöhe beträgt.

3.  Leitschaufelkranz gemäß Anspruch 2, wobei der Versatz (31b) zwischen dem hinteren Oberflächenbereich und der Innenringoberfläche eine Höhe ($h_2$)

aufweist, die 3 % bis 15 % des Durchmessers des Schaufeltellers (21) und/oder einer Kanalhöhe beträgt.

4. Leitschaufelkranz gemäß einem der vorhergehenden Ansprüche, wobei der vordere und der hintere Oberflächenbereich (22a, 22b) in der nominalen und/oder maximalen Öffnungsstellung der Leitschaufel gegenüber der Innenringoberfläche einen Versatz im Wesentlichen gleicher Höhe ($h_1$, $h_2$) aufweisen.

5. Leitschaufelkranz gemäß einem der vorhergehenden Ansprüche, wobei der mindestens eine Schaufelteller an der seinem Schaufelblatt zugewandten Seite eine im Wesentlichen ebene, eine im Wesentlichen konvexe, eine im Wesentlichen konkave oder eine gewellte Oberfläche (22) aufweist.

6. Strömungsmaschine mit einem Leitschaufelkranz gemäß einem der Ansprüche 1 bis 5.

**Claims**

1. Guide vane ring for a turbomachine, the guide vane ring comprising:

   a guide vane row having a plurality of pivotable guide vanes (20), each having a vane airfoil (24) and a vane disk (21); and
   an inner ring (10) having an inner ring surface (12) facing the plurality of guide vanes,
   the vane disks (21) having a front and a rear surface region (22a, 22b), as viewed in the direction (R) of a provided main flow flowing through the turbomachine,
   when at least one of the vane disks is in a nominal and/or a maximum opening position of the guide vane, the front and/or the rear surface region (22a, 22b) having, with respect to a central axis (X) of the inner ring (10), a radial offset (31a, 31b) from the inner ring surface (12),
   **characterized in that**
   the front surface region (22a) of the vane disk in the nominal and/or the maximum opening position of the guide vane is lowered with respect to the inner ring surface (12), and the rear surface region (22b) of the vane disk in the maximum open position of the guide vane is raised with respect to the inner ring surface (12).

2. Guide vane ring according to claim 1, wherein the offset (31a) between the front surface region and the inner ring surface has a height ($h_1$) which is 3% to 15% of the diameter of the vane disk (21) and/or of a channel height.

3. Guide vane ring according to claim 2, wherein the offset (31b) between the rear surface region and the inner ring surface has a height ($h_2$) which is 3% to 15% of the diameter of the vane disk (21) and/or of a channel height.

4. Guide vane ring according to any of the preceding claims, wherein the front and the rear surface region (22a, 22b) in the nominal and/or maximum opening position of the guide vane have an offset with respect to the inner ring surface of substantially the same height ($h_1$, $h_2$).

5. Guide vane ring according to any of the preceding claims, wherein the at least one vane disk has, on the side facing its vane airfoil, a substantially planar, a substantially convex, a substantially concave or a corrugated surface (22).

6. Turbomachine comprising a guide vane ring according to any of claims 1 to 5.

**Revendications**

1. Couronne d'aubes directrices pour une turbomachine, dans laquelle la couronne d'aubes directrices présente :

   une rangée d'aubes directrices comportant une pluralité d'aubes directrices pivotantes (20) comportant respectivement une pale d'aube (24) et un plateau d'aube (21) ; et
   une bague intérieure (10) comportant une surface de bague intérieure (12) orientée vers la pluralité d'aubes directrices,
   dans laquelle les plateaux d'aubes (21) - vus dans la direction (R) d'un flux principal prévu s'écoulant à travers la turbomachine - présentent une zone de surface avant et une zone de surface arrière (22a, 22b),
   dans laquelle, pour au moins l'un des plateaux d'aubes, dans une position d'ouverture nominale et/ou une position d'ouverture maximale de l'aube directrice, la zone de surface avant et/ou la zone de surface arrière (22a, 22b) présentent, par rapport à un axe central (X) de la bague intérieure (10), un décalage radial (31a, 31b) par rapport à la surface de bague intérieure (12),
   **caractérisée en ce que**
   la zone de surface avant (22a) du plateau d'aube est abaissée par rapport à la surface de bague intérieure (12) dans la position d'ouverture nominale et/ou la position d'ouverture maximale de l'aube directrice et la zone de surface arrière (22b) du plateau d'aube est élevée par rapport à la surface de bague intérieure (12) dans la position d'ouverture maximale de l'aube directrice.

2. Couronne d'aubes directrices selon la revendication 1, dans laquelle le décalage (31a) entre la zone de surface avant et la surface de bague intérieure présente une hauteur ($h_1$) qui représente 3 % à 15 % du diamètre du plateau d'aube (21) et/ou d'une hauteur de canal.

3. Couronne d'aubes directrices selon la revendication 2, dans laquelle le décalage (31b) entre la zone de surface arrière et la surface de bague intérieure présente une hauteur ($h_2$) qui représente 3 % à 15 % du diamètre du plateau d'aube (21) et/ou d'une hauteur de canal.

4. Couronne d'aubes directrices selon l'une des revendications précédentes, dans laquelle la zone de surface avant et la zone de surface arrière (22a, 22b) présentent un décalage de hauteurs ($h_1$, $h_2$) sensiblement égales par rapport à la surface de bague intérieure dans la position d'ouverture nominale et/ou maximale de l'aube directrice.

5. Couronne d'aubes directrices selon l'une des revendications précédentes, dans laquelle l'au moins un plateau d'aube présente une surface (22) sensiblement plane, sensiblement convexe, sensiblement concave ou ondulée sur la face orientée vers sa pale d'aube.

6. Turbomachine comportant une couronne d'aubes directrices selon l'une des revendications 1 à 5.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013222980 A1